Europäisches Patentamt

European Patent Office

Office européen des brevets

(11) Numéro de publication: **0 404 000 A1**

## (12) DEMANDE DE BREVET EUROPEEN

(21) Numéro de dépôt: **90111423.1**

(22) Date de dépôt: **18.06.90**

(51) Int. Cl.5: **H04M 3/50, H04M 3/42, H04Q 11/04**

(30) Priorité: **20.06.89 FR 8908188**

(43) Date de publication de la demande:
**27.12.90 Bulletin 90/52**

(84) Etats contractants désignés:
**AT BE CH DE DK ES FR GB IT LI NL SE**

(71) Demandeur: **ALCATEL BUSINESS SYSTEMS**
**12, rue de la Baume**
**F-75008 Paris(FR)**

(72) Inventeur: **Barbier, Nathalie**
**c/o ALCATEL BUSINESS SYSTEMS 54 avenue**
**Jean-Jaurès**
**F-92707 Colombes Cedex(FR)**
Inventeur: **Hoyami, Jean-Claude**
**37, rue Verniquet**
**F-75017 Paris(FR)**
Inventeur: **Cartret, Roger**
**7 Résidence Cadet de Vaux**
**F-95130 Franconville(FR)**
Inventeur: **Le Cucq, Gérald**
**32, rue Saint Vincent**
**F-78580 Maule(FR)**

(74) Mandataire: **Weinmiller, Jürgen et al**
**Lennéstrasse 9 Postfach 24**
**D-8133 Feldafing(DE)**

(54) **Equipement de messagerie vocale pour autocommutateur.**

(57) Equipement de messagerie vocale pour postes téléphoniques rattachés à un autocommutateur.

L'équipement comporte un enregistreur-lecteur (17) muni d'au moins une unité de disque mémoire (32) pour l'enregistrement de messages à retransmettre en différé. Il comporte des moyens (18,22) pour mettre simultanément en communication différents postes téléphoniques avec un contrôleur de disque (33) de l'enregistreur-lecteur pour une transmission simultanée de messages émanant tant des postes que de l'unité de disque.

L'invention concerne les centraux téléphoniques de type privé .

FIG. 1

EP 0 404 000 A1

## Equipement de messagerie vocale pour autocommutateur

L'invention concerne les équipements de messagerie vocale pour autocommutateur, notamment ceux permettant d'offrir un service, dit de boîte aux lettres, aux usagers des postes téléphoniques rattachés à un autocommutateur temporel numérique.

Les services de messagerie vocale sont conçus pour permettre aux utilisateurs de postes téléphoniques de recevoir des messages de type sonore, par voie téléphonique et de les faire enregistrer pour consultation ultérieure, sans avoir à engager eux-mêmes un processus de réponse aux appels lors de ces derniers.

Ces services permettent parfois aussi aux mêmes utilisateurs de faire transmettre des messages téléphoniques enregistrés, personnalisés ou non, par exemple en diffusion à des moments choisis vers des destinataires spécifiés ou encore vers ceux qui les appellent par voie téléphonique.

De tels services peuvent éventuellement être fournis par un équipement individuel de type répondeur-enregistreur intégré dans un poste ou terminal téléphonique, ou encore placé au voisinage et raccordé à ce dernier, ils sont aussi avantageusement assurés par les autocommutateurs de rattachement des postes ou terminaux téléphoniques, un poste étant alors susceptible de disposer d'une "boîte aux lettres" individuelle ou partagée pour les messages de ses utilisateurs, tant en réception qu'en émission.  .

Cette seconde solution permet de regrouper au niveau d'un autocommutateur la quasi-totalité du matériel et du logiciel nécessaires au fonctionnement du système, les postes ne nécessitant que peu ou pas d'adjonctions pour l'exploitation du service de messagerie.

L'équipement de messagerie vocale d'un autocommutateur doit alors être capable de recevoir simultanément et d'enregistrer plusieurs messages pour les postes qui lui sont rattachés. Ceci s'obtient par exemple en reliant l'équipement de messagerie vocale au réseau de connexion de l'autocommutateur par l'intermédiaire d'au moins une liaison multiplexe temporelle sur laquelle les messages simultanément reçus sont multiplexés dans le temps. Il suffit alors de disposer d'un arragement de mémoire dont la vitesse d'enregistrement et la capacité soient compatibles avec respectivement le débit et le volume de signaux de parole échantillonnés transmis par la ou les liaison multiplexes.

L'équipement de messagerie vocale d'un autocommutateur doit aussi être capable de restituer en temps réel tout message destiné à un poste au gré de l'utilisateur et quel que soit le nombre total de messages enregistrés et l'ancienneté de ces messages par rapport à l'ensemble des messages simultanément conservés.

Ceci implique l'emploi de mémoires de très grande capacité à court temps d'accès. Pour des raisons économiques il est connu de mettre en oeuvre des disques durs dont la capacité est grande et dont les temps d'accès sont relativement courts.

L'un des objectifs fixés consiste alors à trouver une structure d'équipement de messagerie et un procédé d'exploitation conduisant à une réalisation fiable et efficace qui soit moins coûteuse pour une installation téléphonique donnée que l'équipement des postes en répondeurs-enregistreurs individuels.

L'invention propose donc un équipement de messagerie vocale pour postes téléphoniques rattachés à un autocommutateur doté d'un réseau de connexion pour la mise en communication de ces postes entre eux et éventuellement avec d'autres postes téléphoniques rattachés à d'autres autocommutateurs dans un réseau où les autocommutateurs sont reliés par des liaisons téléphoniques, ledit équipement, étant destiné à permettre une mise en communication des postes téléphoniques de manière différée au travers du réseau de connexion par l'intermédiaire d'un enregistreur-lecteur, qui est muni d'au moins une unité de disque mémoire pour l'enregistrement des messages à retransmettre en différé.

Selon une caractéristique de l'invention, l'équipement de messagerie vocale comporte des moyens pour mettre simultanément en communication différents postes téléphoniques avec un contrôleur de disque de l'enregistreur-lecteur pour une transmission simultanée de messages émanant tant des postes téléphoniques que d'au moins une unité de disque, lesdits moyens étant aptes à assurer d'une part le compactage cyclique d'un nombre déterminé d'échantillons de parole successivement transmis en un temps donné "T" par une voie temporelle de liaison multiplexe par laquelle le réseau de connexion accède à l'équipement, en un groupe d'échantillons d'un granule, ainsi que la transmission en un bloc de ce groupe dans un délai inférieur à la formation d'un groupe, après sa propre formation et entre les autres groupes provenant soit d'autres voies temporelles de la liaison, soit du contrôleur de disque en provenance d'une unité de disque en cours de retransmission, d'autre part le décompactage de chaque groupe retransmis en une succession d'échantillons de parole et la transmission d'une telle succession par une voie temporelle de la liaison multiplexe vers un poste téléphonique, via le réseau de connexion.

L'invention, ses caractéristiques et ses avantages sont précisés dans la description qui suit, en liaison avec les figures évoquées ci-dessous.

La figure 1 présente un schéma d'un autocommutateur doté d'un équipement de messagerie vocale selon l'invention.

La figure 2 présente le schéma d'une carte de traitement de parole selon l'invention.

La figure 3 présente le schéma de découpe du logiciel relatif à l'application messagerie vocale d'un autocommutateur.

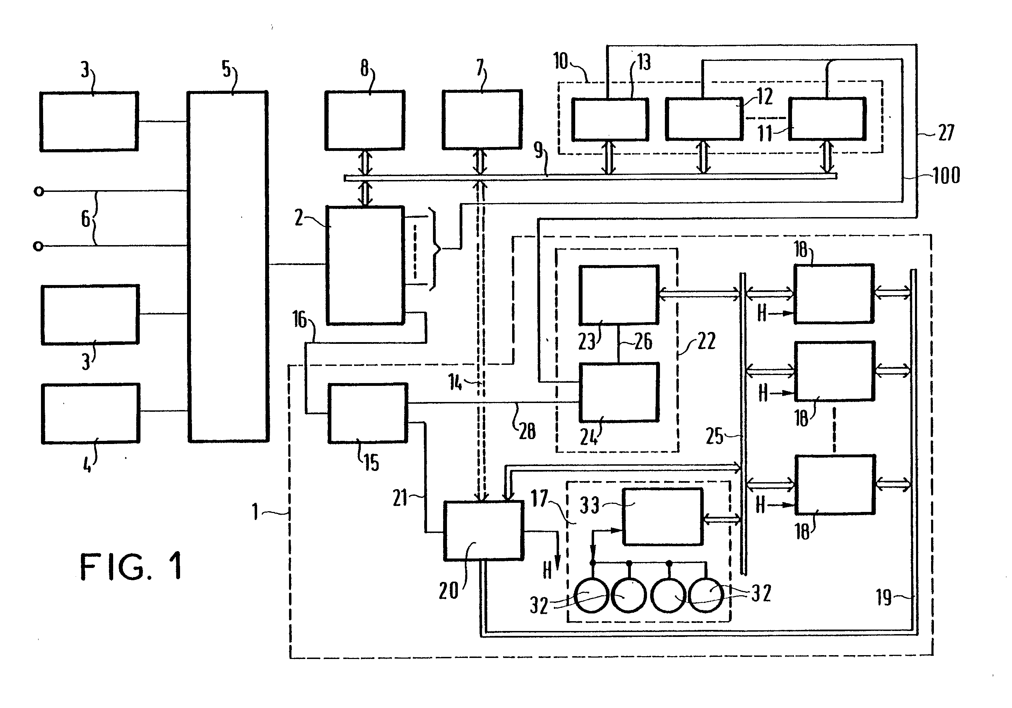

L'équipement de messagerie vocale 1 présenté en figure 1 est destiné à être associé à un autocommutateur pour offrir un service de boîte aux lettres pour messages sonores, le plus souvent vocaux, aux utilisateurs des postes rattachés à cet autocommutateur.

L'autocommutateur pris en exemple ici est un autocommutateur temporel numérique multiservice du type décrit dans l'article intitulé "L'autocommutateur multiservice OPUS 4000" publié dans le n° 4 de la revue "Commutation et Transmission" en 1985.

Un tel autocommutateur comporte classiquement un réseau de connexion 2 permettant d'interconnecter à la demande des postes téléphoniques 3, 4, qui lui sont rattachés, soient entre eux soient avec d'autres postes téléphoniques rattachés à d'autres autocommutateurs auxquels le réseau de connexion 2 à accès.

Dans l'exemple de réalisation envisagé, l'interfaçage entre les postes 3, 4 le réseau de connexion 2 de l'autocommutateur auxquels ils sont rattachés, s'effectue par l'intermédiaire d'unités de raccordement 5 auxquelles aboutissent aussi des liaisons téléphoniques 6 d'interconnexion entre autocommutateurs.

Parmi les postes 3, 4 figurent par exemple de simples postes téléphoniques 3 et des terminaux téléphoniques 4 comportant des facilités supplémentaires, telles qu'affichage et/ou traitement de données. Les uns et les autres sont susceptibles d'être de type analogique ou de type numérique, ils ont pour caractéristique commune d'être tous aptes à émettre et recevoir des signaux sonores, lorsques ceux-ci sont dans la bande téléphonique de fréquences.

Ils effectuent tous une conversion des ondes sonores en signaux transmissibles par liaison électrique, radio-électrique ou optique vers l'autocommutateur. Un échantillonnage et un codage sont effectués avant transmission sous forme électrique à l'équipement de messagerie vocale 1, cet échantillonnage et ce codage peuvent s'effectuer à divers niveaux du chemin reliant un poste téléphonique à l'équipement de messagerie vocale, qui le dessert, via le réseau de connexion 2 de l'autocommutateur comportant cet équipement.

Les liaisons téléphoniques 6 qui relient l'autocommutateur considéré à d'autres autocommutateurs sont par exemple des liaisons filaires multiplexes temporelles classiques ou éventuellement de simples liaisons filaires analogiques les signaux qu'elles transmettent vers l'équipement de messagerie vocale 1 sont préalablement échantillonnés et codés en un point choisi, en fonction des possibilités, sur le chemin reliant le poste émetteur à cet équipement.

L'autocommutateur incluant l'équipement de messagerie vocale 1 comporte classiquement un système de commande 7 associant au moins un processeur à un ensemble de mémoires mortes et vives 8 reliés entre eux par une structure de bus 9, qui permet également la commande du réseau de connexion 2 et la communication de l'ensemble de commande avec des équipements de l'autocommutateur par l'intermédiaire d'un ensemble de coupleurs 10.

Ces coupleurs sont par exemple des coupleurs de signalisation 11 permettant l'échange de signalisations entre l'ensemble de commande de l'autocommutateur et l'environnement auquel cet autocommmutateur est relié, notamment les postes rattachés et les autres autocommmutateurs.

Ce sont aussi des coupleurs télématiques 12 permettant l'échange de signaux de parole ou de données notamment entre postes par l'intermédiaire du réseau de connexion et de liaisons téléphoniques.

Ce sont encore des coupleurs informatiques 13, permettant de raccorder divers équipements informatiques tels des mémoires, de type disque dur ou bande, des téléimprimeurs et des imprimantes à l'ensemble de commande ; ces coupleurs informatiques 13 sont classiquement dotés de ports normalisés, par exemple selon la norme V24 du CCITT.

Les coupleurs de signalisation 11 et les coupleurs télématiques 12 sont reliés à des ports du réseau de connexion 2 par une ou plusieurs liaisons multiplexes temporelles 100 pour assurer les fonctions d'échange qui leur sont dévolues.

L'équipement de messagerie vocale 1 se raccorde par au moins une liaison multiplexe temporelle à l'autocommutateur qu'il vient compléter. Ce raccordement s'effectue par exemple au niveau de la structure de bus 9 de l'autocommutateur qui comporte alors une liaison multiplexe temporelle interne 14, ici à trente-deux voies offrant un débit de 2,048 Mbit/S qui permet le transfert d'échantillons MIC, codés dans ce cas en loi μ.

Alternativement, ce raccordement peut s'effectuer au niveau d'un port de réseau de connexion 2 par une liaison multiplexe temporelle 16, individuelle et normalisée, dont seules trente voies sont exploitables pour la transmission d'échantillons.

Une interface d'accès 15 assure une récupération des signaux d'horloge transmis par la liaison 16, ainsi que la séparation ou la réunion des octets de voie de signalisation et des octets des voies de parole qui transitent entre le réseau de connexion 2 et l'équipement de messagerie vocale, via cette liaison 16.

Les signaux de parole transmis par les postes 3, et par les liaisons téléphoniques 6 à destination de l'équipement de messagerie vocale sont transmis pour être stockés par un enregistreur-lecteur de messages téléphoniques 17, qui est apte tant à mémoriser les messages constitués de tels signaux de parole échantillonnés et codés qu'à les restituer ultérieurement sous la même forme et a la demande.

L'enregistreur-lecteur 17 est composé ici d'une ou de plusieurs unités de disques magnétiques 32, à grande capacité de mémoire, qui communiquent avec les postes 3 et lignes téléphoniques 6. ces unités sont accessibles par l'intermédiaire d'un contrôleur 33.

L'enregistreur-lecteur 17 est relié à une pluralité de circuits de traitement de parole 18. Ces derniers sont connectés en parallèle à une liaison multiplexe temporelle 19 servant de bus interne. Cette liaison multiplexe 19 vient se raccorder, ici par un circuit adaptateur 20, soit à la liaison 14, soit à une liaison 21 aboutissant au port de l'interface d'accès 15 par lequel transitent les octets des voies de parole après séparation des octets de voie de signalisation.

Chaque circuit de traitement de parole 18 est conçu pour préparer la mise en mémoire d'un message dont les échantillons MIC sont successivement transmis par une même voie de liaison multiplexe temporelle 19 au cours d'une communication durant laquelle le circuit de traitement de parole 18 considéré et un poste téléphonique 3, 4 sont interconnectés, via le réseau de connexion 2.

Chaque circuit de traitement de parole 18 est également apte à reconstituer un message à destination d'un poste 3, 4 à partir des enregistrements effectués par l'enregistreur-lecteur 17 lors de la réception du message ainsi qu'à retransmettre ce message reconstitué vers notamment ce poste, sous forme d'échantillons MIC sur une voie de la liaison multiplexe temporelle 19.

Les échantillons MIC transmis par la liaison multiplexe 19 transitent par le circuit adaptateur 20 qui assure de manière connue en soi d'éventuelles adaptations électriques et une isolation électrique entre liaisons 14 ou 21 et liaison 19.

Dans l'exemple de réalisation proposé, le circuit adaptateur 20 assure également une extraction de signaux d'horloge et de synchronisation au profit de l'équipement de messagerie vocale 1 à partir des signaux reçus de l'une ou l'autre des liaisons 14 et 21. Les signaux extraits correspondants sont transmis aux divers circuits concernés de l'équipement et en particulier aux circuits de traitement de parole 18, via un ensemble de liaisons symbolisées par la lettre H sur la figure 1.

Le fonctionnement de l'équipement de messagerie vocale 1 est supervisé par un premier agencement de commande 22 programme, cet agencement est ici accessible à cet effet par exemple par téléchargement et/ou par l'intermédiaire d'une liaison télétype et/ou d'un lecteur de disquette non représentés. La programmation de l'agencement de commande 22 peut aussi être assurée au moyen d'une mémoire de type REPROM incorporée dans cet agencement.

Dans la réalisation proposée, l'agencement de commande 22 est organisé autour de deux unités de commande programmées 23 et 24 affectées à des tâches complémentaires, chaque unité étant organisée autour d'un processeur, par exemple de la série 68000 produit par la société MOTOROLA, associé à des mémoires et circuits auxiliaires.

L'unité de commande 23, dite de gestion, est plus spécifiquement chargée du stockage et de la restitution des messages par l'enregistreur-lecteur 17 auquel elle a accès par l'intermédiaire d'un bus 25 auquel accèdent aussi les circuits de traitement de parole 18, par lesquels transitent les messages. L'unité de commande 23, dite d'appplication, est programmée de manière à assurer l'attribution de la liaison bus 25 aux circuits de traitement de parole et à l'enregistreur-lecteur 17, en fonction de leurs besoins d'accès mutuels, ces circuits et cet enregistreur-lecteur étant en position d'esclaves.

Le bus 25 dessert aussi le circuit adaptateur 20 de manière à notamment permettre un rebouclage interne au niveau de ce circuit adaptateur, lors de tests d'émission-réception vers ou à partir de l'enregistreur-lecteur 17, via les circuits de traitement de parole 18.

L'unité de commande 24 est plus spécifiquement chargée de l'exploitation de l'application messagerie vocale, elle assure la prise en compte des demandes d'enregistrement et de restitution des messages. A cet effet cette unité de commande 24, qui dispose de programmes correspondants aux tâches liées aux opérations de prise en compte évoquées ci-dessus, comporte une mémoire vive sauvegardée dans laquelle se stockent les informations relatives aux boîtes aux lettres individuellement affectées aux utilisateurs accrédités pour leurs messages.

Les informations contiennent des données relatives aux caractéristiques propres à chaque boîte aux lettres, en particulier son affectation, sa taille et des caractéristiques relatives à son contenu, notamment à la présence ou à l'absence de messages enregistrés, au nombre de messages reçus, à leur identification, etc...

Dans la réalisation présentée, les deux unités de commande 23 et 24 communiquent entre elles par une liaison 26. Il est bien entendu envisageable de fondre les deux unités de commande en une seule moins coûteuse, dans le cas d'installation de faible capacité.

De même en variante, l'unité de commande 24 est susceptible d'être comprise dans l'ensemble associant le système de commande 7 et ses mémoires 8.

Dans l'exemple de réalisation présenté, l'unité de commande 24 est reliée par une liaison 27 à un coupleur informatique 13, ici de type V24, pour ses échanges de signalisation avec l'autocommutateur.

Cette liaison 27 permet à l'unité de commande 24 de recevoir et d'émettre des signalisations téléphoniques au travers du coupleur 13, par exemple lors de l'établissement d'une communication depuis un poste téléphonique, lorsque le circuit adaptateur 20 est relié à la liaison 14 multiplexe temporelle synchrone, de type MIC, de la structure de bus 9 pour les échanges d'échantillons de parole relatifs aux messages transmis.

Ainsi la signalisation téléphonique émise par un poste téléphonique vers l'équipement de messagerie vocale, via le réseau de connexion 2, est alors transmise vers l'unité de commande 24 par le système de commande 7 de l'autocommutateur qui l'a reçue au travers d'un coupleur de signalisation 11 relié au réseau et qui l'a retransmet alors par l'intermédiaire du coupleur 13.

Dans l'autre forme de réalisation proposée, une liaison 28 entre interface d'accès 15 et unité de commande 24 permet à cette dernière de recevoir et d'émettre des octets de signalisation téléphonique au travers de cette interface d'accès 15, lorsque celle-ci transmet, vers le circuit adaptateur 20, les échantillons de parole relatifs aux messages transmis sur la liaison 16. Ceci tant pour les échanges de signalisation avec le système de commande 7 lui-même qu'avec les postes locaux ou distants.

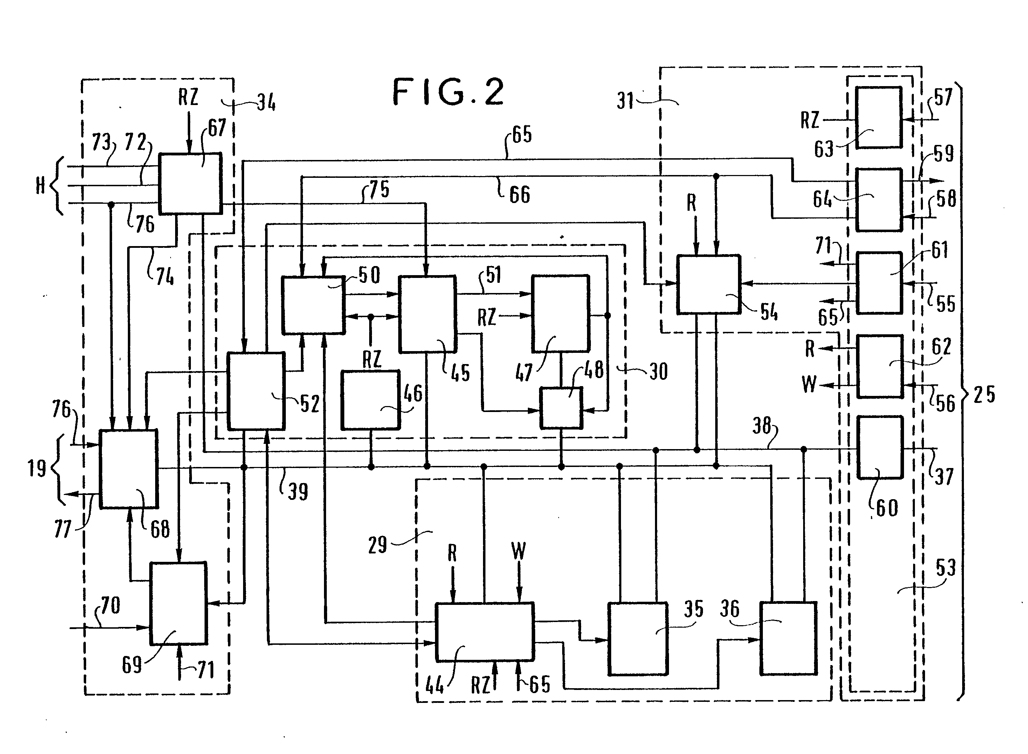

Un circuit de traitement de parole 18 selon l'invention est présenté en figure 2, il sert d'interface entre l'enregistreur-lecteur 17 et l'environnement téléphonique de ce dernier, il fonctionne sous la supervision conjointe du système de commande 7 pour ses liaisons avec l'environnement téléphonique et de l'agencement de commande 22 pour ses liaisons avec l'enregistreur-lecteur 17. Les signaux d'horloge et de synchronisation nécessaires à son fonctionnement en liaison avec l'environnement téléphonique lui sont fournis par la liaison H, ils lui permettent de recevoir et d'émettre par l'intermédiaire d'une voie temporelle bidirectionnelle de la liaison multiplexe 19. L'attribution d'une voie temporelle à un circuit de traitement de parole 18 pour la durée d'un message à enregistrer ou à restituer est du ressort du système de commande 7. Le choix d'un circuit est effectué par l'unité de commande 24 informée de la demande d'un utilisateur qui lui est transmise par l'intermédiaire de ce même système de commande 7.

C'est par contre l'unité de commande 23 qui, en liaison avec le contrôleur de disque 33, gère les mises en communication d'un circuit de traitement de parole 18 avec l'enregistreur-lecteur 17, via le bus 25, pour un message donné.

La possibilité de transmission simultanée de messages par des voies temporelles distinctes de la liaison multiplexe 19 et par conséquent par autant de circuits de traitement de parole 18, implique un partage dans le temps de l'utilisation de l'enregistreur-lecteur 17 et du bus 25 par les circuits de traitement de parole. Pour des raisons liées aux conditions d'enregistrement et de restitution relatives aux unités de disque 32, chaque message est morcelé en tronçon successifs de même durée, dits granules. Les octets d'échantillons de parole d'une granule, sont compressés pour réduire le volume de mémoire nécessaire à leur enregistrement dans une unité de disque 32.

Les octets obtenus après compression pour chacun des granules successifs d'un message sont transmis dans un délai D, vers l'enregistreur-lecteur 17 par le circuit de traitement de parole 18 concerné, le délai D de transmission d'un granule étant fixe. De même l'enregistreur-lecteur 17 restitue chaque message, granule par granule, avec un délai maximal entre groupes d'octets de granules successifs qui doit rester inférieur à D.

Les différents circuits de traitement de parole 18 simultanément actifs se partagent donc le bus 25, avec l'enregistreur-lecteur 17, pour leurs émissions respectives sous l'autorité de l'unité de commande 23, de manière à respecter les conditions de délai évoquées ci-dessus, les intervalles de transmission entre groupes d'octets de granules successifs d'un même message étant susceptible de varier au cours du temps.

En conséquence chaque circuit de traitement de parole comporte une unité de stockage temporaire 29 pour les octets des messages à enregistrer ou à restituer, une unité de traitement 30 pour assurer les manipulations d'octets et deux interfaces de dialogue 31 et 34 pour partager la charge des échanges, l'une avec l'agencement de commande 22 et l'enregistreur-lecteur 17, l'autre avec l'environnement téléphonique.

L'unité de stockage 29 comporte ici deux registres de stockage 35, 36 aptes à contenir les octets reçus de la liaison multiplexe 19, ou à lui transmettre, pendant un temps D. Ces registres sont simultanément exploités de manière que l'un soit en lecture alors que l'autre est en écriture, tant lors des phases d'enregistrement de message que dans celles de restitution.

Dans la réalisation proposée, chaque registre de stockage ou 36 communique d'une part avec une liaison bidirectionnelle de transmission de données 37 de la liaison bus 25, via une première liaison interne 38, ici multifilaire, d'autre part avec la liaison multiplexe 19, via une seconde liaison interne 39, il est relié à chacune de ces liaisons internes par un coupleur d'accès non représenté. Les coupleurs d'accès sont commandés individuellement par une logique d'aiguillage et d'adressage 44, en fonction des besoins de stockage ou de restitution, cette logique déclenche aussi l'écriture et la lecture au niveau des registres de stockage, sous le contrôle soit de l'agencement de commande 22, soit de l'unité de traitement 30.

Celle-ci comporte un processeur de gestion 45 notamment chargé de dissocier les échantillons de signalisation multifréquence susceptibles d'être reçus de la liaison multiplexe 19, en liaison avec une transmission de message, des échantillons de parole relatifs à ce message. En effet seuls ces derniers sont à conserver par l'enregistreur-lecteur 17.

Le processeur de gestion 45 est ici un processeur de traitement de signal, par exemple de type TMS 320C10 de la société TEXAS INSTRUMENTS. Il agit aussi en contrôleur de gain et assure une mise à niveau automatique des échantillons de parole reçus de la liaison multiplexe 19 en vue de leur enregistrement à un niveau optimal par l'enregistreur-lecteur et de leur restitution ultérieure de manière audible, quelles que soient les variations de niveau et les silences survenus à la saisie des signaux sonores, lors de leur prise en compte au niveau des postes téléphoniques. Le processeur de gestion 45 est relié à cet effet à la logique d'adressage et d'aiguillage 4 et à une unité de mémoire 46, qui lui est affectée, par la liaison interne 39.

Un processeur de traitement 47 est associé au processeur de gestion 45 dans chaque circuit de traitement de parole pour assurer la compression des messages à enregistrer qui sont reçus sous forme d'échantillons multiplexés dans le temps par l'intermédiaire d'une voie de liaison multiplexe 19 et la décompression des messages qui sont restitués sous forme de groupes d'octets de granule par l'intermédiaire du bus 25.

A cet effet le processeur de traitement 47 est relié par un port à un circuit tampon 48 qui lui donne accès à l'unité de stockage 29 via la liaison interne 39.

La commande de ce circuit tampon 48 est partagée entre les processeurs de gestion et de traitement qui sont par exemple de même type, le premier régissant les transferts d'octets à compresser vers le circuit tampon à partir de l'un ou l'autre des registres 35, 36 de l'unité de stockage et le retour des octets après compression vers cette unité.

Le second vient lire les octets à compresser inscrits dans ce circuit tampon 48 et lui restitue des octets compressés.

La présence d'octets compressés à transférer du circuit tampon 48 à l'unité de stockage 29 est signalée par le processeur de traitement 47 au processeur de gestion 45 par l'intermédiaire d'un circuit d'interruption 50 qui vient agir à une entrée appropriée du processeur de gestion. Ce dernier est également apte à transmettre une demande d'interruption au processeur de traitement par une liaison 51.

Le circuit d'interruption 50 centralise les demande d'interruption à destination du processeur de gestion 45, en particulier celles émanant de l'unité de commande 23, de la logique 44 et du processeur de traitement 47. Le processeur de gestion 45 signale au circuit d'interruption 50, chaque prise en compte d'interruption qu'il effectue. Cette signalisation s'effectue par l'intermédiaire d'un sélecteur 52 qui sert aussi d'interface de commande au processeur de gestion, vis à vis notamment de la logique 44, pour la gestion des registres de stockage 35 et 36, de leurs coupleurs, et d'organes définis plus loin des interfaces de dialogue 31, 34.

Un sous-ensemble d'entrée-sortie 53 est associé à un sous-ensemble de registres 54 dans l'interface de dialogue 31 reliant l'unité de stockage temporaire 29 et l'unité de traitement 30 d'un circuit de traitement de parole au bus 25 auquel ce circuit est relié.

Chaque sous-ensemble d'entrée-sortie 53 permet classiquement la transmission des données entre les organes qu'il dessert et assure une séparation, autorisant notamment la permanence du fonctionnement du bus 25 en cas de défaillance du circuit de traitement de parole dont ce sous-ensemble fait partie.

Dans l'exemple présenté, le sous-ensemble d'entrée-sortie 53 est connecté aux diverses liaisons constituant le bus 25 en particulier à la liaison multifilaire de transmission de données 37, à la liaison multifilaire d'adressage 55, à la liaison de commande d'écriture-lecture 56, à une liaison 57 de remise à zéro par l'unité de commande 23, et à deux liaisons inverses 58, 59 d'interruption, l'une à partir de l'unité de traitement 30 du circuit et l'autre à partir de l'unité de commande 23.

L'interconnexion entre la liaison de transmission de données 37 et la liaison interne 38 s'effectue par un classique coupleur bidirectionnel 60, du type à trois états. Des coupleurs 61 à 64 plus ou moins élaborés assurent l'interface entre les différentes liaisons 55 à 59 et les organes du circuit de traitement de parole que chacune d'elle dessert.

L'unité de commande 23 commande. Le coupleur 61 de type sélecteur pour notamment agir sur la logique via une liaison 65 et sur le sous-ensemble de registres 54. Le coupleur 62 permet à cette unité de commande 23 de venir lire ou écrire par des commandes R ou W, notamment l'unité de stockage temporaire 29 en agissant sur le logique 44. Le coupleur 63 permet une remise à zéro des organes du circuit de traitement de parole, par l'unité de commande 23 et/ou l'unité de traitement 30, via une liaison RZ.

Le coupleur 64 assure une transmission contrôlée des demandes d'interruption émanant du processeur de gestion 45, via le sélecteur 52 et la liaison 65, vers l'unité de commande 23 et une transmission inverse des demandes d'interruption de cette dernière, via la liaison 58 et une liaison 66 aboutissant au circuit d'interruption 50 et au sous-ensemble de registres 54. Ce dernier est exploité conjointement par le processeur de gestion 45 et par l'unité de commande 23 pour leurs actions mutuelles. Le sous-ensemble 54 comporte ici un registre d'état, un registre de commande et un registre d'interruption non représentés, il est relié aux liaisons internes 38, 39 qui sont accessibles l'une par le processeur de gestion, l'autre par l'unité de commande et il reçoit des commandes spécifiques de l'un via le sélecteur 52 et de l'autre via les coupleurs 61, 62 et 64.

Le registre d'état est chargé par le processeur de gestion en vue de sa lecture par l'unité de commande 23, le registre de commande et le registre d'interruption sont chargés par l'unité de commande et lus par le processeur de gestion.

L'interface de dialogue 34 reliant un circuit de traitement de parole 18 à son environnement téléphonique comporte essentiellement un circuit de sélection de voie temporelle 67, relié aux liaisons 4 du circuit circuit adaptateur 20 de l'équipement de messagerie vocale 1, et un coupleur bidirectionnel 68 reliant la liaison interne 39 du circuit de traitement de parole au lien entrant 76 et au liaison sortant 77 de la liaison multiplexe temporelle 19. Un circuit d'injection de tonalité 69 est ici associé aux circuits 67 et 68 pour permettre de produire des tonalités, à destination des utilisateurs en fonction des besoins notamment lors de l'enregistrement des messages, à partir d'un générateur non représenté. Ce dernier est par exemple extérieur à la messagerie et il est relié au circuit d'injection par une liaison 70.

La commande du circuit d'injection est partagée entre le processeur de gestion 45 et l'unité de commande 23 auxquels il est relié d'une part via le sélecteur 52 pour l'un et la liaison 38 pour l'autre.

Le circuit d'injection 65 assure l'envoi des tonalités vers l'utilisateur, au travers du coupleur bidirectionnel 68, sur la voie temporelle du lien sortant 77 attribuée au circuit de traitement de parole qui le comporte pou la communication en cours.

Le coupleur 68 assure ici une conversion série parallèle des bits d'échantillon de parole transmis par la liaison 19 vers le circuit de traitement de parole qui le comporte, il assure aussi la synchronisation des bits d'échantillons transmis vers la liaison 19 après sérialisation. Il est commandé par le processeur de gestion 50, via le sélecteur 52, il est déclenché au rythme fixé par les signaux d'horloge régissant les liaisons multiplexes de l'autocommutateur qui le comporte, ces signaux lui étant fournis par une liaison 71.

Le circuit de sélection de voie temporelle 67 est contrôlé par le système de commande 7 de l'autocommutateur, via la liaison H, il reçoit les signaux d'horloge par la liaison 71, les signaux de synchronisation destinés aux liaisons multiplexes temporelles qui lui sont fournis par une liaison 72 et une affectation d'intervalle de temps de voie temporelle pour une communication donnée par une liaison 73. Une liaison 74 permet au circuit de sélection de voie temporelle 67 de fournir au coupleur 68 un signal permettant à ce dernier d'émettre et de recevoir sur la liaison multiplexe 19 dans l'intervalle de temps attribué au circuit de traitement de parole qui le comporte une indication relative à cet intervalle attribué est transmise au processeur de gestion, via une liaison 75.

Suite à la description des divers organes des circuits de traitement de parole nécessaires à l'invention, le fonctionnement de l'équipement de messagerie selon cette invention est précisé ci-dessous.

Dans la réalisation envisagée, l'accès à l'enregistreur-lecteur est de type séquentiel, un seul circuit de traitement de parole étant susceptible d'être en communication avec l'enregistreur-lecteur 17 à un instant donne.

Chacun des circuits de parole actifs accède successivement à l'enregistreur-lecteur par la liaison bus 25 sous le contrôle de l'agencement de commande 22.

En raison des contraintes liées au processus de fonctionnement des unités de disque, il n'est pas souhaitable de réaliser les communications entre circuits de traitement de parole 18 et enregistreur-lecteur 17 échantillon par échantillon, comme cela se fait ici pour les communications via le circuit adaptateur 20 vers le réseau de connexion, si l'on veut exploiter de manière optimale les dispositifs les plus lents de l'ensemble que constituent les unités de disque 32 de l'enregistreur-lecteur.

L'enregistrement d'un message dans l'enregistreur-lecteur 17 s'effectue de manière morcelée pour permettre un accès en temps partagé des différents circuits de traitement de parole 18 actifs à l'enregistreur-lecteur 17 lorsque des messages sont simultanément reçus au travers de ces circuits de traitement de parole et/ou transmis de l'enregistreur-lecteur vers les circuits de traitement. Les granules successifs d'un même message sont alors séparés à l'enregistrement dans l'enregistreur-lecteur par d'autres granules provenant d'autres messages simultanément reçus par l'équipement de messagerie vocale 1.

Dans l'exemple envisagé chaque granule correspond à deux secondes de message initial et les échantillons de parole qui le constituent sont temporairement stockés dans le circuit de traitement de parole 18 lors de l'enregistrement de ce message.

Comme indiqué plus haut, tout message transmis à l'équipement de messagerie vocale 1 est examiné pour rechercher s'il contient une signalisation multifréquence destinée à l'équipement, ceci est effectué par l'intermédiaire du processeur de gestion 45.

Ce dernier est relié au lien entrant 76, via le coupleur 68, il assure la mise à niveau des messages reçus sur ce lien entrant selon un procédé qui ne sera par rappelé ici, dans la mesure où il n'a qu'un rapport indirect avec l'invention.

Tout octet de signalisation multifréquence transmis par le lien entrant 76 est pris en compte par le processeur de gestion 56, qui l'analyse pour d'une part l'exploiter et d'autre part éviter sa mise en mémoire par l'enregistreur-lecteur 17 et en conséquence une prise en compte parasite d'un tel octet de signalisation à la retransmission à partir du lecteur-enregistreur.

Les octets reçus par le processeur de gestion 45 sont successivement envoyés au processeur de traitement 47 qui est chargé d'assurer une compression des signaux de message.

Dans l'exemple choisi, la compression est de type MICDA usuelle, conforme à la recommandation G721 du CCITT, le programme de compression est mémorisé dans le circuit intégré du processeur 47 de traitement qui est masqué. Ce processeur de traitement 47 assure également la décompression nécessaire à la restitution des échantillons d'un message qui a été préalablement enregistré sous forme compressée dans l'enregisteur-lecteur.

Les échantillons transmis pour compression par le processeur de gestion 45 au processeur de traitement 47 transitent par l'intermédiaire du registre tampon 48 alternativement commandé par ces processeurs, ils sont ensuite temporairement stockés.

Le stockage d'un message s'effectue granule par granule dans le circuit de traitement de parole, chargé de traiter ce message à l'enregistrement, les échantillons de parole compressés des granules successifs sont alternativement placés, granule par granule, dans l'un ou l'autre des registres de stockage temporaire 35 et 36, sous le contrôle du processeur de gestion 45 agissant via la logique d'adressage 44.

Les octets de signalisation multifréquences qui sont éventuellement reçus au cours d'un message sont mémorisés comme des échantillons de parole dans les registres de stockage temporaire 35 et 36 pendant le laps de temps prévu qui est nécessaire à la reconnaissance d'une telle signalisation par le processeur de gestion, selon un programme classique. Ils ne sont pas retransmis vers le lecteur-enregistreur 17, contrairement aux échantillons de parole qui sont transmis, granule par granule, via le coupleur bidirectionnel 60 et la liaison de données 37.

Cette transmission des échantillons de parole des granules vers l'enregistreur-lecteur 17 s'effectue sous la commande de l'unité de commande 23 via le bus 25.

Selon une technique usuelle, l'un des registres de stockage temporaire 35, 36 est exploité en réception alors que l'autre l'est en émission tant lors de l'enregistrement d'un message dans l'équipement de messagerie vocale 1, par l'intermédiaire du circuit de traitement de parole comportant ces registres, que lors de la restitution d'un message à partir de l'enregistreur-lecteur 17.

Comme indiqué plus haut c'est l'unité de commande 23 qui coordonne les mises en communication des registres de stockage temporaire 35 et 36 des différents circuits de traitement de parole avec le lecteur-enregistreur 17, tant lors de l'enregistrement des échantillons de parole compressés des granules, que lors de la retransmission de ces échantillons.

Dans la réalisation proposée, l'unité de commande 23 adresse cycliquement chacun des circuits de traitement de parole via la liaison d'interruption 58, chaque adressage autorise la transmission d'une éventuelle demande d'interruption du processeur de gestion 45 vers l'unité de commande 23 par l'intermédiaire de la liaison d'interruption 59.

Une telle demande d'interruption est générée par chaque processeur de gestion 45 pour chacune des communications de la carte de traitement de parole, qui le comporte, avec l'unité de commande 23 et en particulier pour toute transmission d'un bloc d'échantillons de parole compressés d'un granule.

Les demandes d'interruption émises par les processeurs de gestion 45 des cartes de traitement de parole 18 actives sont prises en compte par un gestionnaire d'interruption de l'unité de commande 23. Dans la mesure ou chaque circuit de traitement de parole en communication est amené à stocker les échantillons de parole granule par granule et où les transmissions sur la liaison bus multiplexe 19 s'effectuent en temps réel, il est indispensable que chaque circuit de traitement de parole actif puisse avoir périodiquement accès au lecteur-enregistreur 17 pendant un laps de temps minimal nécessaire à la transmission des échantillons de parole compressés d'un granule, dans un délai inférieur à la durée prédéterminée "T", d'ici deux secondes, choisie pour un granule.

Dans l'exemple de réalisation envisagé, un nombre de seize accès à l'enregistreur-lecteur 17 pour les circuits de traitement de parole et un accès pour maintenance doivent pouvoir être obtenus, si besoin est, dans un laps de temps au plus égal à la durée d'un granule et cela pendant un temps indéterminable à l'avance.

L'unité de commande 23 est donc organisée pour que les interruptions déclenchées par les circuits de traitement de parole en communication et l'enregistreur-lecteur soient traitées dans un délai inférieur à la durée d'un granule à partir de leurs apparitions respectives. L'ordre de traitement est dynamiquement fixé en fonction de l'ancienneté des apparitions respectives, il évite toute prise en compte hors délai qui conduirait à un écrasement d'échantillons au niveau des circuits de traitement de parole.

La compression des échantillons de parole de chaque granule permet de réduire d'autant les durées de transmission vers l'enregistreur-lecteur 17 à l'enregistrement et de ce dernier vers les circuits de traitement de parole 18 à la restitution.

L'inactivité temporaire de circuits de traitement de parole 18 en l'absence de communication les concernant, facilite bien entendu l'accès l'enregistreur-lecteur de ceux qui sont actifs, puisqu'elle réduit d'autant le nombre d'interruptions prises en compte par l'unité de commande 23.

L'échange des échantillons de parole compressés entre les circuits de traitement de parole 18 et le lecteur-enregistreur s'effectue par l'intermédiaire d'un dispositif d'accès direct en mémoire que comporte l'unité de commande 23, il se réalise par l'intermédiaire des registres tampons 35, 36 et du contrôleur de disque 33 de l'enregistreur-lecteur 17.

L'enregistrement des données d'échantillons de parole compressés est réalisée en choisissant une organisation logique des blocs de données de messages sur les disques, des conditions de transfert de données vers ou à partir des disques et une architecture matérielle de l'ensemble unités de disque-contrôleur de disques qui sont orientées pour permettre une grande rapidité d'accès.

A cet effet le contrôleur de disque 33 est choisi de bas niveau de manière à disposer de la maîtrise de tous les temps nécessaires aux transferts de données sur les disques, ce contrôleur de disque gère ici toutes les unités de disque 32, il est par exemple de type ST506 normalisé.

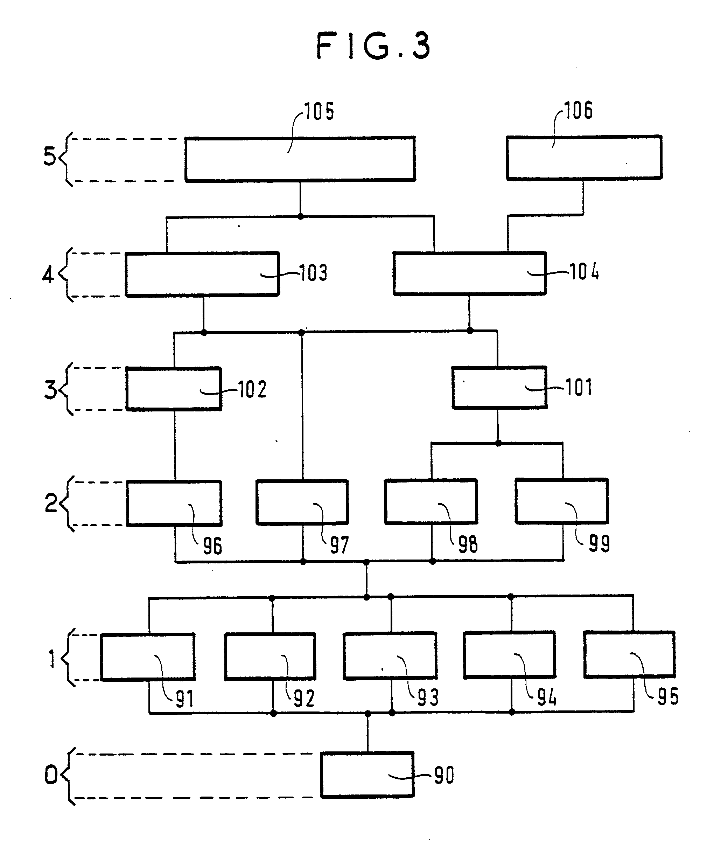

La découpe du logiciel nécessaire au fonctionnement de l'équipement de messagerie vocale est brièvement rappelée sur la figure 3, elle comporte ici six niveaux.

Le niveau zéro est constitué par un classique noyau multitâche 90 temps réel qui est prévu le plus simple possible.

Le niveau 1 comporte une pluralité de systèmes de gestion 91 à 95. Le système de gestion 91 est chargé de l'allocation des zones de mémoire, le système de gestion 92 assure la gestion logicielle des boîtes à lettres vocales de communication intertâche spécialisées.

Le système de gestion 93 assure la gestion logicielle des divers délais. Le système de gestion 94 est chargé de l'horodatage des messages. Le système de gestion 95 est chargé des piles de tâches, il est plus particulièrement destiné à éviter la surcharge sde ces piles.

Le niveau entrée-sortie 2 comporte un système de gestion 96 de la liaison 26, un système de gestion 97 des cartes de traitement de parole, un système de gestion 98 du enregistreur-lecteur et accessoirement un système de gestion 99 de disquettes de chargement. Le système de gestion 98 du lecteur-enregistreur est commun aux différentes unités de disques 32, il s'occupe des transferts et des positionnements des blocs de données des messages sur les différents disques et assure notamment leur mise en file pour chacun des disques, il est organisé de manière à réduire le nombre de commutations de contexte entre tâches et par conséquent de gagner du temps système. Les exécutions au niveau de ce système de gestion 98 sont prioritaires et les requêtes s'effectuent en mode privilégié, sans interruption susceptible de conduire ce système à temporairement perdre la main.

Le niveau 3 comporte un système 101 de gestion de fichiers qui assure la répartition logique des messages sur chaque disque et qui a accès aux systèmes de gestion 98 et 99, il comporte aussi un gestionnaire de communications 102 chargé de superviser les entrées/sorties et accèdant à cet effet au système de gestion de liaison 96.

Le niveau 4 comporte un programme d'exploitation 103 et un programme de maintenance 104. Les tâches du programme d'exploitation 103 sont ici essentiellement réparties en "n" tâches d'exploitation identiques, chacune pour une communication et en conséquence pour une voie temporelle de liaison multiplexe, ainsi qu'en une tâche de gestion qui assure en particulier les effacements de message.

Le niveau 5 comporte essentiellement un interpréteur 105 et un programme de maintenance automatique 106.

L'interpréteur 105 assure la répartition des commandes entrantes correspondant aux demandes de communications qui sont faites par les utilisateurs et qui sont transmises par l'intermédiaire du système de gestion 96 de liaison synchrone 26 en provenance de l'unité 24.

Dans la réalisation envisagée, le renvoi sur messagerie vocale est à la disposition des utilisateurs de postes téléphoniques, rattachés à l'autocommutateur comportant l'équipement de messagerie vocale. Ces utilisateurs sont susceptibles de disposer de boîtes aux lettres individuelles ou partagées pour la réception de messages qui leur sont destinés et qui émanent de tout autre poste du réseau téléphonique comprenant l'autocommutateur, ainsi que pour la communication de messages, enregistrés dans ces boîtes aux lettres par d'autres pour eux et éventuellement par eux-mêmes vers d'autres, notamment vers tout poste appelant.

Un poste remplissant les conditions nécessaires à l'obtention d'une boîte aux lettres est apte à se faire attribuer par l'unité de commande 24, dite d'application, une boîte dont les caractéristiques sont mémorisées dans une mémoire vive, statique, sauvegardée, accessible par cette unité. Ces caractéristiques comprennent par exemple un code d'affectation personnel à un poste téléphonique, le nombre de messages emmagasinés à l'instant de consultation considéré et leurs références, le type d'exploitation autorisé, l'exploitation en cours etc. Le choix d'une mémoire statique directement reliée par bus à l'unité de commande d'application 24 favorise la rapidité d'accès de cette dernière aux informations, relatives aux postes dotés de boîtes, qui sont nécessaires tant à l'enregistrement qu'à la restitution des messages.

Toute opération d'enregistrement, de lecture ou d'effacement d'un message, à partir d'un poste téléphonique par un utilisateur, implique la mise en communication du poste téléphonique demandeur avec l'équipement de messagerie vocale 1 par le réseau de connexion 2 après appel direct ou non de cet équipement par l'utilisateur demandeur. Cet appel peut être spécifique, par exemple par appui d'une touche spécialisée ou par numérotation d'un code particulier, dans le cas d'un appel d'un poste ayant une boîte à lettre dans l'équipement de messagerie vocale 1, ce peut être aussi un appel usuel de poste à poste, dans le cas où le poste appelé est en position de renvoi vers l'équipement de messagerie vocale.

Dans ces différents cas, le système de commande 7 de l'autocommutateur communique avec l'unité de commande d'application 24 de l'équipement de messagerie vocale 1 par la liaison 27 pour un éventuelle mise en communication de l'utilisateur appelant avec une boîte aux lettres auquel le numéro téléphonique demandé donne accès, si la messagerie est accessible.

L'unité de commande d'application 24 prend alors en compte les caractéristiques d'exploitation de cette boîte aux lettres et interroge alors l'unité de commande de gestion 23 pour faire temporairement associer un circuit de traitement de parole 18 à un intervalle de temps de trame de liaison multiplexe temporelle 19 et par conséquent 14 ou 16, dont l'identité est transmise à cet effet par le système de commande 7. La mise à disposition d'un circuit de traitement de parole 18 libre est indiquée à l'unité de commande d'application 24.

L'unité de commande d'application 24 signale alors cette disponibilité au système de commande 7 de l'autocommutateur qui établit alors un chemin au travers du réseau de connexion entre le poste appelant et le circuit de traitement de parole.

Parallèlement l'unité de commande d'application 24 prend en compte le type d'action à réaliser, afin de mettre en oeuvre le menu correspondant, ces actions correspondant par exemple à un enregistrement à partir d'un poste téléphonique auquel une boîte aux lettres est affectée, à un enregistrement par un poste téléphonique appelant un poste auquel une boîte aux lettres est affectée, à une lecture des messages contenus dans une boîte aux lettres par un utilisateur autorisé, à un effacement de message, etc...

Dans ces différents cas, l'unité de commande d'application 24 définit le menu à appliquer pour satisfaire la demande présentée, ainsi que les différents guides sonores, de type tonalité ou messages parlés, à émettre vers le demandeur pour obtenir le résultat recherché.

Ceci s'effectue en liaison avec le processeur de gestion 45 du circuit de traitement de parole 18 concerné et par l'intermédiaire de l'unité de commande de gestion 23, pour la réalisation des émissions sur la voie temporelle reliant ce circuit de traitement de parole au poste appelant.

Chaque guide sonore comporte un ou plusieurs messages sonores invitant l'utilisateur appelant à agir selon un processus connu de lui ou indiqué, par exemple l'envoi d'un code multifréquence au moyen de son poste téléphonique ou celui du message sonore qu'il veut enregistrer.

L'unité de commande de gestion 23 établit un descripteur pour chaque nouveau message, afin d'être apte à créer et retrouver ce message sur le disque de l'enregistreur-lecteur 17 ou les échantillons de parole qui le composent sont enregistrés.

A cet effet elle cherche un emplacement de descripteur disponible sur la carte de descripteurs de l'un des disques disponibles, et en liaison un volume de mémoire sur la carte correspondante pour les échantillons de parole compressés du message sur ce disque.

· Pour des raisons de rapidité d'accès, le choix d'un disque pour l'enregistrement d'un nouveau message prend en compte le nombre d'accès déjà en cours sur chacun des disques exploitables à l'instant du choix et leurs remplissages respectifs de manière à choisir le moins rempli et celui dont l'accès est le moins chargé.

Ceci est facilité par le fait que le système logiciel de conduite dit "driver" du système de gestion 98 est commun pour les différentes unités de disque qu'il contrôle et supervise par l'intermédiaire du système de gestion de fichiers 101 qui reçoit ses commandes des tâches individuelles d'exploitation.

Les granules d'échantillons de parole d'un message, compressés par exemple dans un rapport deux quatre ou six et successivement transmis vers l'enregistreur-lecteur 17 ou à partir de lui, sont implantés dans des secteurs d'un disque qui ne sont pas nécessairement jointifs tant pour des raisons de rapidité d'accès que de chronologie d'apparition.

De ce fait chaque descripteur de message qui comporte des données d'identification relatives à son identité individuelle, son type, son état, sa longueur et sa date, contient aussi une table d'implantation des granules du message qu'il accompagne il contient également des pointeurs permettant de définir les positions du dernier granule écrite, du prochain granule à écrire et du dernier granule exploitable.

Les références du descripteur correspondant sont ensuite transmises de l'agencement de commande 22 après enregistrement du message auquel il se rapporte. L'unité de commande 24 consigne ces références de descripteur dans la boîte aux lettres concernée pour permettre la signalisation de message aux utilisateurs accrédités venant lire le contenu de la boîte aux lettres qui le contient et pour permettre la restitution, c'est-à-dire la lecture de ce message ainsi défini.

Cette lecture s'accomplit d'une manière comparable dans son déroulement à celle évoquée ci-dessus pour l'enregistrement, l'enregistreur-lecteur assurant alors la transmission des granules au circuit de traitement parole choisi pour décompression et envoi sur une voie temporelle préétablie de liaison multiplexe temporelle 19 vers un utilisateur accrédité demandeur de restitution, via le réseau de connexion 2 et le poste téléphonique de cet utilisateur.

Il en est de même de l'effacement des messages enregistrés qui est susceptible de s'effectuer dans des conditions similaires tant à la demande du titulaire d'une boîte aux lettres que du gestionnaire de l'autocommutateur concerné, en cas de besoin pour ce dernier.

## Revendications

1/ Equipement de messagerie vocale pour postes téléphoniques (3, 4) rattachés à un autocommutateur doté d'un réseau de connexion (2) pour la mise en communication de ces postes entre eux et éventuellement avec d'autres postes téléphoniques rattachés à d'autres autocommutateurs dans un réseau où les autocommutateurs sont reliés par des liaisons téléphoniques (6), ledit équipement, qui est destiné à permettre une mise en communication des postes téléphoniques de manière différée au travers du réseau de connexion (2) par l'intermédiaire d'un enregistreur-lecteur (17) qu'il comporte et qui est muni d'au moins une unité de disque mémoire (32) pour l'enregistrement des messages à retransmettre en différé, étant caractérisé en ce qu'il comporte des moyens (18, 22) pour mettre simultanément en communication différents postes téléphoniques avec un contrôleur de disque (33) de l'enregistreur-lecteur pour une transmission simultanée de messages émanant tant des postes téléphoniques (3, 4) que d'au moins une unité de disque (32), lesdits moyens étant aptes à assurer d'une part le compactage cyclique d'un nombre déterminé d'échantillon de parole successivement transmis en un temps donné "T" par une voie temporelle de liaison multiplexe (19) par laquelle le réseau de connexion (2) accède à l'équipement, en un groupe d'échantillons d'un granule, ainsi que la transmission en un bloc de ce groupe dans un délai inférieur à la formation d'un groupe, après sa propre formation et entre les autres groupes provenant soit d'autres voies temporelles de la liaison (19) soit d'une unité de disque en cours de retransmission via le contrôleur de disque (33), d'autre part le décompactage de chaque groupe, retransmis par le contrôleur de disque, en une succession d'échantillons de parole et la transmission d'une telle succession par une voie temporelle de la liaison multiplexe (19) vers un poste téléphonique, via le réseau de connexion (2).

2/ Equipement de messagerie vocale selon la revendication 1, pour autocommutateur doté d'un système de commande (7) associé à un ensemble de mémoires (8) et organisé autour d'au moins un processeur, caractérisé en ce qu'il comporte un agencement de commande (22) programmé assurant le stockage et la restitution et l'exploitation des messages transmis à l'enregistreur-lecteur (17), la prise en compte des demande d'enregistrement et de retransmission de messages, et en ce que le logiciel de gestion de l'application messagerie vocale, découpé en plusieurs niveaux (0 à 5) dont les extrêmes comportent l'un un noyau multitâches (90) classique et l'autre au moins un interpréteur (105), comporte un système de gestion d'enregistreur-lecteur (98), commun pour les différentes unités de disque, qui est placé de manière que les exécutions correspondantes soient prioritaires et qui permet de réduire le nombre de commutations de contexte entre tâches.

3/ Equipement de messagerie vocale selon au moins l'une des revendications 1 et 2, caractérisé en ce que les moyens de mise en communication de postes téléphoniques avec le contrôleur de disque (33) de l'enregistreur-lecteur comportent une pluralité de circuits de traitement de parole (18) aptes chacun à assurer d'une part le compactage des échantillons émanant d'une voie temporelle de la liaison multiplexe à laquelle ils sont reliés en parallèle, d'autre part le décompactage de chaque groupe successivement retransmis par le contrôleur de disque (33) en provenance d'une unité de disque (32) pour un message déterminé à émettre sur une voie temporelle donnée de liaison multiplexe (19).

4/ Equipement de messagerie vocale selon la revendication 3, caractérisé en ce que les moyens de mise en communication de postes téléphoniques avec le contrôleur de disque (33) comportent un agencement de commande (22) programmé qui est relié d'une part au contrôleur de disque (33) et aux circuits de traitement de parole (18) par un bus (25) donnant un accès direct des circuits de traitement de parole au contrôleur de disque pour le stockage et la restitution des messages transmis à l'enregistreur-lecteur (17), d'autre part à une structure de bus (9), desservant le système de commande (7) de l'autocommutateur auquel l'équipement de messagerie vocale est associé, pour la prise en compte des demandes d'exploitation de la messagerie vocale.

5/ Equipement de messagerie vocale, selon la revendication 4, caractérisé en ce que chaque circuit de traitement de parole (18) comporte des moyens de commande sensibles d'une part aux signaux d'horloge et de synchronisation transmis par la liaison multiplexe temporelle (19) d'autre part aux signaux de liaison bus (25), ces moyens étant aptes à commander tant l'émission que la réception des échantillons parole de message, tant en série sur une voie temporelle de cette liaison multiplexe (19) qu'en parallèle sur la liaison bus (25) sous la supervision de l'agencement de commande (22) de l'équipement.

6/ Equipement de messagerie vocale, selon la revendication 5, caractérisé en ce que les moyens de commande de chaque circuit de traitement de parole (18) comportent un processeur de traitement de signal (45), dit de gestion, relié d'une part à la liaison multiplexe temporelle (19) par un coupleur bidirectionnel, d'autre part à la liaison bus (25) via un sous-ensemble de registres (54), ledit processeur de gestion (45) partageant alternativement avec l'agencement de commande (22) de l'équipement la commande en écriture et en lecture, dans une paire de registres de stockage (34, 35), d'échantillons de parole d'une même voie en transit vers ou en provenance de l'enregistreur-lecteur (17).

7/ Equipement de messagerie vocale selon la revendication 6 caractérisé en ce que chaque circuit de traitement de parole comporte de plus un second processeur de traitement de signal (47) apte à assurer tant la compression des échantillons de parole provenant d'une voie temporelle en vue de leur compactage par groupe préalablement à leur transmission au contrôleur de disque (33) que la décompression des échantillons provenant par bloc d'une unité de disque (32) via le contrôleur de disque et vers une voie temporelle de liaison multiplexe (19).

8/ Equipement de messagerie vocale selon la revendication 5, caractérisé en ce que le processeur de gestion (45) d'un circuit de traitement de parole est programmé pour assurer la détection des signalisations multifréquences de clavier émises sur une voie temporelle de liaison multiplexe par un poste téléphonique, en cours de communication avec l'équipement et pour inhiber la transmission de cette signalisation au-delà des registres de stockage (34, 35).

9/ Equipement de messagerie vocale selon les revendications 5 et 7, caractérisé en ce que le processeur de gestion (56) d'un circuit de traitement de parole est programmé pour assurer un contrôle de dynamique de gain sur les échantillons de parole provenant d'une voie temporelle de liaison multiplexe (19), avant compression par le processeurs de traitement (70) de manière à les cadrer dans une plage donnée préalablement à leur compression et en vue de leur enregistrement par une unité de disque (32).

10/ Equipement de messagerie vocale selon la revendication 4, caractérisé en ce que l'agencement de commande (22) dont il est doté, comporte deux unités de commande (23, 24) organisées chacune autour d'un processeur, l'une de ces unités de commande (23), dite de gestion étant reliée d'une part à l'autre unité de commande (24), d'autre part aux circuits de traitement de parole (18) et au contrôleur de disque (33) par la liaison bus (25) pour le stockage et la restitution des messages transmis à l'enregistreur-lecteur (17), l'autre unité de commande (24) dite d'application, étant reliée à la structure de bus (9), via un coupleur (11) pour assurer la prise en compte des demandes d'enregistrement et de retransmission des messages.

11/ Equipement de messagerie vocale selon au moins l'une des revendications 4 et 10, caractérisé en ce que l'agencement de commande (22) comporte une mémoire vive sauvegardé pour le stockage des informations relatives aux boîtes aux lettres affectées aux utilisateurs accrédités pour leurs messages.

FIG. 1

FIG.2

# F I G . 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 785 473 (PFEIFFER)<br>* Colonne 5, lignes 10-36; colonne 6, lignes 29-58 * | 1-4 | H 04 M   3/50<br>H 04 M   3/42<br>H 04 Q  11/04 |
| A | | 8 | |
| | --- | | |
| Y | REVIEW OF THE ELECTRICAL COMMUNICATION LABORATORIES, vol. 32, no. 6, novembre 1984, pages 1010-1018, Tokyo, JP; I. NISHIKADO et al.: "Voice storage system for centralized extension system"<br>* Page 1010, colonne de droite, lignes 6-29; figures 1,3; page 1015, paragraphe 4.3 * | 1-4 | |
| | --- | | |
| X | REVIEW OF THE ELECTRICAL COMMUNICATION LABORATORIES, vol. 32, no. 6, novembre 1984, pages 1003-1009, Tokyo, JP; M. OHYAMA et al.: "Voice storage equipment"<br>* Pages 1005-1007; paragraphe 3.2 * | 1 | |
| | --- | | |
| A | N.E.C. RESEARCH AND DEVELOPMENT, no. 84, janvier 1984, pages 39-46; M. NISHIO et al.: "Distributed processing architecture for APEX/NEAX2400 VMM (Voice Mail Module)"<br>* Figures 2-5; pages 40-43, paragraphe 3 * | 1,2 | DOMAINES TECHNIQUES RECHERCHES (Int. Cl.5)<br><br>H 04 M<br>H 04 Q |
| | ----- | | |

Le présent rapport a été établi pour toutes les revendications

| Lieu de la recherche | Date d'achèvement de la recherche | Examinateur |
|---|---|---|
| LA HAYE | 07-09-1990 | VANDEVENNE M.J. |